# EUROPEAN PATENT SPECIFICATION

(11) **EP 1 516 256 B1**
(45) Date of publication and mention of the grant of the patent: **28.03.2007**
(21) Application number: 03732767.3
(22) Date of filing: 04.06.2003
(51) Int. Cl.: G06F 11/07, G06F 1/32

(54) **METHOD AND BASE CHIP FOR MONITORING THE OPERATION OF A MICROCONTROLLER UNIT**
VERFAHREN UND BASIS-SCHALTKREIS ZUR ÜBERWACHUNG DES BETRIEBS EINES MIKROKONTROLLERS
PROCEDE ET PUCE DE BASE PERMETTANT DE SURVEILLER LE FONCTIONNEMENT D'UNE UNITE DE MICROCONTROLEUR

(30) Priority: 10.06.2002 DE 10225472
(43) Date of publication of application: 23.03.2005
(73) Proprietor: Philips Intellectual Property & Standards GmbH, 20099 Hamburg (DE); Koninklijke Philips Electronics N.V., 5621 BA Eindhoven (NL)
(72) Inventor: WAGNER, Martin Philips Int.Prop.& Standards Gmbh, 52066 Aachen (DE); MUTH, Matthias Philips Int.Prop. & Standards Gmbh, 52066 Aachen (DE)
(74) Representative: Meyer, Michael Josef
(86) International application number: PCT/IB2003/002098
(87) International publication number: WO 2003/104993

(56) References cited:
- EP-A- 0 357 588
- DE-A- 19 611 942
- US-A- 5 594 646
- US-A- 5 600 785
- "PERMANENT ERROR LOG IN AN ADAPTER CARD" IBM TECHNICAL DISCLOSURE BULLETIN, IBM CORP. NEW YORK, US, vol. 37, no. 10, 1 October 1994 (1994-10-01), page 657 XP000475816 ISSN: 0018-8689

## Description

The present invention relates to a method of monitoring the operation of at least one microcontroller unit that is intended for at least one application and is associated with a system according to the preamble of claim 1 (cf. prior art document DE 19611942 A1).

The present invention further relates to a base chip according to the preamble of claim 4 (cf. prior art document DE 196 11 942 A1) as well as to an associated system, in particular to a control system.

In modern-day control units, in automobile electronics for example, it is no longer usual for use to be made of permanently preprogrammed microcontrollers because the fixed preset program means that modifications cannot then be made in the course of ongoing volume production or by the end-customer. Motor-vehicle manufacturers are therefore increasingly going over to the practice of using so-called volatile memories or flash memories in the microcontrollers; volatile memories of this kind allow the program code to be overwritten at any time, which can be done both in production and in a repair shop, as part of an inspection say.

Something that is normally felt to be very much of a disadvantage with flash memories of this kind is the fact that in principle the possibility exists of the program being partly or even totally lost during the life of the motor-vehicle, and hence that the burnt-in software may crash at some random point. Program crashes of this kind may then mean that a control unit can no longer be changed properly to a state in which its current consumption is at a reduced level. Hence a vehicle becomes subject to a sustained, raised current consumption even in the parked state, i.e. with the ignition switched off, and this discharges the vehicle's battery and, if the worst comes to the worst, makes the vehicle impossible to start.

Because all the control units are interconnected in series, the seriousness of a fault of the kind described above may become very great. Via the interconnections, a faulty control unit with a defective flash memory may cause the entire motor vehicle to be permanently "awake" and in this way may give rise to an extreme power consumption, Substantially the same problem is caused by all the other faults of cyclic occurrence that cause constant resetting of the control unit, such as a short-circuit in the supply (producing an undervoltage caused by the switched on of a load, etc.) or the like.

In the prior art, attempts are now being made to detect the system behavior by means of a so-called "watchdog" (a configurable timer having a clock-signal derived from an independent source) within the control unit. What the term "watchdog" is generally understood to mean in this connection is a technique that is used to monitor devices, connections or software cyclically. If a piece of software is no longer following the ordered path laid down by the software, the watchdog is intended to reset the microcontroller and in this way to restore the running of the program to its planned course.

The watchdog is however powerless to help if what repeatedly occurs is that there is a crash of the software or a reset, due say to an undervoltage, at some random point in the program, the watchdog or undervoltage detector resets the control unit, and it then crashes or causes an undervoltage again at a later point in time at the same point in the software. What is produced in this way is an endless loop from which the control unit is able to escape.

Finally, reference can be made to prior art document US 5 594 646 where a method as well as an apparatus for self-diagnosis for an electronic control system for vehicles is disclosed, this method and this apparatus comprising a memory with battery.

Taking the disadvantages and shortcomings described above as a point of departure and with due allowance for the prior art outlined, it is an object of the present invention so to further develop a method of the kind detailed in the first paragraph and a base chip of the kind detailed in the second paragraph that the operation of a microcontroller unit that is intended for an application and is associated with a serial system of the above kind is monitored, so that faulty operation, and particularly faulty operation that causes battery discharge, can be reliably avoided.

This object is achieved by a method having the features specified in claim 1 and by a base chip having the features specified in claim 4. Advantageous embodiments and useful refinements of the present invention are described in the respective sets of dependent claims.

The present invention is therefore based not only on providing a method of monitoring but also on providing a system chip giving fault-statistics support. For this purpose it is proposed that at least one non-volatile memory area that allows the application software to keep fault statistics be provided in the application and in particular in the system chip.

This memory area should advantageously be arranged outside the microcontroller and should also have an independent supply, so that even short-circuits in the supply voltage to the microcontroller will not cause a loss of the statistical data that has been logged. An independently supplied memory area of this kind also allows the microcontroller to make use in intervening periods of a planned mode of operation in which there is no current supply (a so-called "sleep mode"), without losing the statistical data.

In a particularly advantageous refinement of the present invention, write access to the memory area is only permitted if the system starts again after a reset process. In this way the possibility can be ruled out of the memory area being accidentally overwritten in operation by, say, faulty software. Read access on the other hand should always be possible, to allow a system diagnosis to be undertaken at any time.

In both the method and the base chip according to the present invention, it is possible for the cause of a reset event to be detected and made available to the microcontroller unit when required. In this way, different reset events can be detected and can be dealt with separately.

If for example the watchdog times out due to a faulty volatile memory, the microcontroller is notified of this reset event and the application software stores this information in the non-volatile memory area that is provided in accordance with the invention. For each reset event of this kind, the software may for example increment this fault memory and, when some given count is reached, may no longer start normally but may go to a fail-safe state in which the current consumption is low,

In a particularly inventive embodiment, the use of at least one S[ystem] B[ase] C[hip] allows both the voltage supply to the microcontroller unit and also the watchdog and the reset hardware to be provided with undervoltage detecting facilities.

Within such system base chips that are permanently supplied by the battery, it is easy for the prescribed memory area to be implemented in the form of a R[andom] A[ccess] M[emory] because voltage is available constantly in this case (giving a cost benefit over an E[lectrically] E[rasable] P[rogrammable] R[ead] O[nly] M[emory]).

The detection of the reset event may also advantageously take place in the S[ystem] B[ase] C[hip] and it may be stored there, because the S[ystem] B[ase] C[hip] is itself responsible for checking the system reset. Hence, the system base chip may also, in an optimum way, perform the locking of the memory bits in the non-volatile memory area, because the S[ystem] B[ase] C[hip] itself checks the starting of the system and can block off the memory area after a successful start.

In accordance with the present invention, all the components required for developing a fail-safe system are available to the user. What is particularly advantageous is the flexibility of the present approach, because there are no fixed preset automatic functions that have to be incorporated in the S[ystem] B[ase] C[hip]. This allows the safety scheme for an application to be adapted and adjusted in the optimum manner and to be defined and/or scaled by the user in any desired way.

Finally, the present invention relates to the use of a method of the kind described above and/or of at least one base chip of the kind described above for monitoring the operation of a microcontroller unit intended for at least one application, in automobile electronics and particularly in the electronics of motor vehicles.

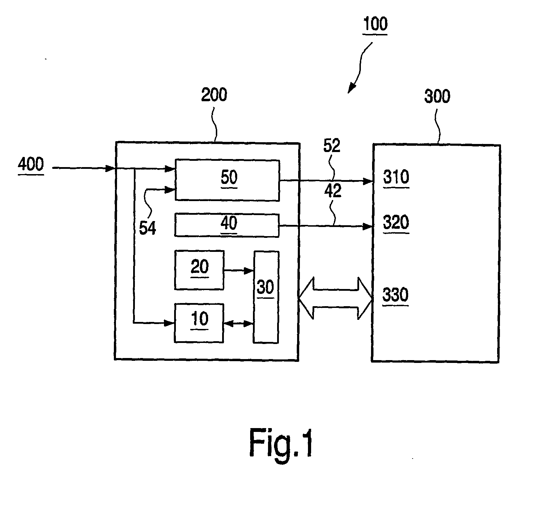

As has already been described above, there are various possible ways in which the teaching of the present invention may advantageously be embodied and refined. On the one hand, reference can be made in this connection in particular to the claims dependent on claims 1 and 5, and on the other, further aspects, features and advantages of the present invention are apparent from and will be elucidated with reference to the illustrative embodiment shown in Fig. 1 and described hereinafter.

In the drawings:
Fig. 1 is a block diagram of an embodiment of system according to the present invention having a base chip and a microcontroller unit.

Shown diagrammatically in Fig. 1 is a control system 100 that, as well as a microcontroller unit 300 having a supply unit 310 (providing the VDD supply), a reset unit 320 and an I[nput]/O[utput] module 330, also has a so-called S[ystem] B[ase] C[hip] 200 for monitoring the operation of the microcontroller unit 300, the said microcontroller unit 300 being intended for an application.

For this purpose, the system chip 200 has, amongst other things, a non-volatile memory area 10 (= a "general purpose memory") by means of which fault statistics relating to the operation of the microcontroller unit 300 can be produced and logged. The system chip 200 permits write access to the freely programmable bits of the memory unit 10 only while the system 100 is starting, in order to prevent faulty write accesses from occurring in operation. Read access to the freely programmable bits of the memory unit 10 on the other hand is always possible.

Because the system chip 200 allows a distinction to be made between different reset events and the different events to be made accessible to the application controller 300, the system chip 200 has an information unit 20 (for reset source information) that is provided to allow for different reset events, and a reset unit 40 (for system resets) that is connected to the microcontroller unit 300 by a connection 42 (going to the reset unit 320 of the microcontroller unit 300).

To allow information, and particularly fault statistics data, to be exchanged, the memory area 10 and the information unit 20 have inserted in front of them an interface unit 30 (feeding the I[nput]/O[utput] module 330 of the microcontroller unit 300).

As is also apparent from what is shown in Fig. 1, the memory area 10 and a microcontroller supply unit 50 that is connected to the microcontroller unit 300 by a connection 52 have permanently associated with them at least one battery unit 400. Whereas the memory bits in the memory unit 10 that are available to the application receive a permanent supply from the battery 400, the microcontroller supply unit 50 can be switched on and off by means of a switch 54, thus enabling a temporary energy supply to be associated with the microcontroller unit 300 via the microcontroller supply unit 50 (supplying the VDD supply unit 310 of the microcontroller unit 300).

So, to sum up, it can be said that the system base chip 200 shown in Fig. 1 is intended to detect and track cyclic fault situations in E[lectronic] C[ontrol] U[nits] to prevent any sustained high current consumption by the control system 100 from being caused by cyclic fault situations of this kind.

Certain bits (= so-called "general-purpose bits") in a memory unit 10 forming part of the system base chip 200, which bits have a continuous supply, then allow the above-mentioned fault events to be stored using the application software and the statistical information thereby obtained to be kept available, notably even if there is (substantially) no power supply to the application controller 300 due to low-energy operation or failure.

In this connection, a specifically provided log or register in the system base chip 200 makes it possible to differentiate between the different fault events and the different cyclic problems to be tracked in this way. If a user-defined threshold is exceeded, the application can then, in accordance with the invention, decide not to (re)start but to go straight to a low-energy mode.

### LIST OF REFERENCE NUMERALS:

- 100: System, in particular a control system
- 10: Memory area
- 20: Information unit
- 30: Interface unit
- 40: Reset unit
- 42: Connection between reset unit 40 and microcontroller unit 300
- 50: Microcontroller supply unit
- 52: Connection between supply unit 50 and microcontroller unit 300
- 54: Switch of supply unit 50
- 200: Base chip, in particular a system base chip
- 300: Microcontroller unit, in particular an application microcontroller
- 310: Supply unit for microcontroller unit 300
- 320: Reset unit for microcontroller unit 300
- 330: I[nput]/O[utput module of microcontroller unit 300
- 400: Battery unit

## Claims

1. A method of monitoring the operation of at least one microcontroller unit (300) that is intended for at least one application and is associated with a system (100), wherein
- the microcontroller unit (300) has at least one non-volatile memory area (10) associated with it,
- the memory area (10) can be read from and/or written to by the microcontroller unit (300), and
- at least one set of statistics, in particular at least one set of fault statistics, relating to the operation of the microcontroller unit (300), can be kept by means of the memory area (10),
**characterized in that**
- in relation to the operation of the microcontroller unit (300), a distinction is made between different reset events, based on reset source information, and
- these different reset events are made accessible to the microcontroller unit (300).

2. The method as claimed in claim 1, **characterized in that** the memory area (10) is permanently supplied by at least one battery unit (400).

3. The method as claimed in claim 1 or 2, **characterized in that** the memory area (10)
- can be read from at any time and/or
- can be written to only after a reset or while the system (100) is restarting.

4. A base chip (200), in particular a system base chip, for monitoring the operation of at least one microcontroller unit (300) that is intended for at least one application, the base chip (200) comprising at least one non-volatile memory area (10) that can be read from and/or written to by the microcontroller unit (300), by means of which memory area (10) at least one set of statistics, in particular at least one set of fault statistics, can be produced relating to the operation of the microcontroller unit (300)
**characterized by**
- at least one information unit (20) providing reset source information to allow the distinction of different reset events,
- at least one reset unit (40) for resetting the microcontroller unit (300), which reset unit (40) is connected (42) to the microcontroller unit (300), and
- at least one power supply unit (50) that is connected (52) to the microcontroller unit (300).

5. The base chip as claimed in claim 4, **characterized in**
- **that** the memory area (10) and the supply unit (50) are permanently associated with at least one battery unit (400), and
- **that** the microcontroller unit (300) has at least one temporary energy supply associated with it via the supply unit (50).

6. The base chip as claimed in claim 4 or 5, **characterized in that** the memory area (10) and/or the information unit (20) are connected to at least one interface unit (30) for the exchange of data with the microcontroller unit (300).

7. A system (100), in particular a control system, **characterized by** at least one microcontroller unit (300) intended for at least one application and by at least one base chip (200) as claimed in any of claims 4 to 6.

8. Use of a method as claimed in any of claims 1 to 3 and/or of at least one base chip (200) as claimed in any of claims 4 to 6 for monitoring the operation of at least one microcontroller unit (300) intended for at least one application in automobile electronics, in particular in the electronics of motor vehicles.

## Patentansprüche

1. Verfahren zum Überwachen des Betriebs mindestens einer Mikrocontroller-Einheit (300), die für mindestens eine Anwendung vorgesehen und mit einem System (100) verbunden ist, wobei
- die Mikrocontroller-Einheit (300) mindestens einen mit ihr verbundenen, nichtflüchtigen Speicherbereich (10) hat,
- der Speicherbereich (10) von der Mikrokontroller-Einheit ausgelesen und/oder beschrieben werden kann und
- mit Hilfe des Speicherbereichs (10) eine Reihe von Statistiken, insbesondere mindestens eine Reihe von Fehlerstatistiken, die sich auf den Betrieb der Mikrocontroller-Einheit (300) beziehen, geführt werden kann,
**dadurch gekennzeichnet, dass**
- in Bezug auf den Betrieb der Mikrocontroller-Einheit auf der Grundlage von Informationen zur Rückstellungsquelle eine Unterscheidung getroffen wird zwischen verschiedenen Rückstellungsereignissen, und
- diese verschiedenen Rückstellungsereignisse der Mikrocontroller-Einheit (300) zugänglich gemacht werden.

2. Verfahren nach Anspruch 1, **dadurch gekennzeichnet, dass** der Speicherbereich (10) ständig von mindestens einer Batterieeinheit (400) versorgt wird.

3. Verfahren nach den Ansprüchen 1 oder 2, **dadurch gekennzeichnet, dass** der Speicherbereich (10)
- jederzeit ausgelesen werden kann und/oder
- nur nach einer Rückstellung oder während des Neustarts des Systems (100) beschrieben werden kann.

4. Basis-Chip (200), insbesondere System-Basis-Chip, zum Überwachen des Betriebs mindestens einer Mikrocontroller-Einheit (300), die für mindestens eine Anwendung vorgesehen ist, wobei der Basis-Chip (200) mindestens einen nichtflüchtigen Speicherbereich (10) umfasst, der von der Mikrokontroller-Einheit ausgelesen und/oder beschrieben werden kann, und wobei mit Hilfe dieses Speicherbereichs (10) mindestens eine Reihe von Statistiken, insbesondere mindestens eine Reihe von Fehlerstatistiken, die sich auf den Betrieb der Mikrocontroller-Einheit (300) beziehen, geführt werden kann,
**gekennzeichnet durch**
- mindestens eine Informationseinheit (20), die Informationen über die Rückstellungsquelle bereithält, um die Unterscheidung verschiedener Rückstellungsereignisse zu erlauben,
- mindestens eine Rückstellungseinheit (40) zum Rückstellen der Mikrocontroller-Einheit (300), wobei die Rückstellungseinheit (40) mit der Mikrocontroller-Einheit (300) verbunden ist (52), und
- mindestens eines Energiequelle (50), die mit der Mikrocontroller-Einheit (300) verbunden ist.

5. Der Basis-Chip nach Anspruch 4, **dadurch gekennzeichnet, dass**
- der Speicherbereich (10) und die Versorgungseinheit (50) ständig mit mindestens einer Batterieeinheit (400) verbunden sind, und
- die Mikrocontroller-Einheit (300) mindestens eine vorläufige Energieversorgung hat, mit der sie über die Versorgungseinheit (50) verbunden ist.

6. Der Basis-Chip nach den Ansprüchen 4 oder 5, **dadurch gekennzeichnet, dass** der Speicherbereich (10) und/oder die Informationseinheit (20) mit mindestens einer Schnittstelleneinheit (30) zum Datenaustausch mit der Mikrocontroller-Einheit (300) verbunden sind.

7. System (100), insbesondere Steuerungssystem, **gekennzeichnet durch** mindestens eine für mindestens eine Anwendung vorgesehene Mikrocontroller-Einheit (300) und **durch** mindestens einen Basis-Chip nach den Ansprüchen 4 bis 6.

8. Verwendung eines Verfahrens nach einem der Ansprüche 1 bis 3 und/oder mindestens eines Basis-Chips (200) nach den Ansprüchen 4 bis 6 zum Überwachen des Betriebs mindestens einer Mikrocontroller-Einheit (300), die für mindestens eine Anwendung in der Automobilelektronik, insbesondere in der Elektronik von Kraftfahrzeugen, vorgesehen ist.

## Revendications

1. Procédé de surveillance du fonctionnement d'au moins une unité de microcontrôleur (300) qui est destinée à au moins une application et est associée à un système (100), dans lequel
- l'unité de microcontrôleur (300) comporte au moins une zone de mémoire non volatile (10) qui lui est associée,
- la zone de mémoire (10) peut être lue à partir de et/ou écrite par le microcontrôleur (300), et
- au moins une série de statistiques, en particulier au moins une série de statistiques de défaut, se rapportant au fonctionnement de l'unité de microcontrôleur (300), pouvent être conservées au moyen de la zone de mémoire (10),
**caractérisé en ce que**
- en relation avec le fonctionnement de l'unité de microcontrôleur (300), une distinction est faite entre différents événements de réinitialisation sur la base d'informations de source de réinitialisation ; et,
- ces différents événements de réinitialisation, sont rendus accessibles à l'unité de microcontrôleur (300).

2. Procédé selon la revendication 1, **caractérisé en ce que** la zone de mémoire (10) est alimentée en permanence par au moins une unité de batterie (400).

3. Procédé selon la revendication 1 ou 2, **caractérisé en ce que** la zone de mémoire (10)
- peut être lue à tout moment et/ou
- peut être écrite uniquement après une réinitialisation ou pendant que le système (100) est en cours de redémarrage.

4. Puce de base (200), en particulier une puce de base de système, pour surveiller le fonctionnement d'au moins une unité de microcontrôleur (300) qui est destinée à au moins une application, la puce de base (200) comprenant au moins une zone de mémoire non volatile (100) qui peut être lue à partir de et/ou écrite par l'unité de microcontrôleur (300), au moyen de laquelle zone de mémoire (10) au moins une série de statistiques, en particulier au moins une série de statistiques de défaut, peut être produite concernant le fonctionnement de l'unité de microcontrôleur (300)
**caractérisée par**
- au moins une unité d'information (20) fournissant des informations de source de réinitialisation pour permettre la distinction de différents événements de réinitialisation,
- au moins une unité de réarmement (40) pour réarmer l'unité de microcontrôleur (300), laquelle unité de réinitialisation (40) est connectée (42) à l'unité de microcontrôleur (300), et
- au moins une unité d'alimentation en puissance (50) qui est connectée (52) à l'unité de microcontrôleur (300).

5. Puce de base selon la revendication 4, **caractérisée en ce que**
- la zone de mémoire (10) et l'unité d'alimentation en puissance (50) sont associées en permanence avec au moins une unité de batterie (400), et
- l'unité de microcontrôleur (300) comporte au moins une alimentation en énergie temporaire qui lui est associée par le biais d'une unité d'alimentation (50).

6. Puce de base selon la revendication 4 ou 5, **caractérisée en ce que** la zone de mémoire (10) et/ou l'unité d'information (20) sont connectées à au moins une unité d'interface (30) pour l'échange de données avec l'unité de microcontrôleur (300).

7. Système (100), en particulier système de commande, **caractérisé par** au moins une unité de microcontrôleur (300) destinée à au moins une application et par au moins une puce de base (200) selon l'une quelconque des revendications 4 à 6.

8. Utilisation d'un procédé selon l'une quelconque des revendications 1 à 3 et/ou d'au moins une puce de base (200) selon l'une quelconque des revendications 4 à 6 pour surveiller le fonctionnement d'au moins une unité de microcontrôleur (300) destinée à au moins une application dans l'électronique automobile, en particulier l'électronique de véhicules à moteur.
